Europäisches Patentamt

European Patent Office

Office européen des brevets

(11) Publication number: **0 312 267**
**A2**

## EUROPEAN PATENT APPLICATION

(21) Application number: **88309402.1**

(22) Date of filing: **07.10.88**

(51) Int. Cl.⁴: **G02B 6/08**

The title of the invention has been amended (Guidelines for Examination in the EPO, A-III, 7.3).

(30) Priority: **13.10.87 JP 256279/87**

(43) Date of publication of application:
**19.04.89 Bulletin 89/16**

(84) Designated Contracting States:
**DE FR GB NL**

(71) Applicant: **MITSUBISHI RAYON CO. LTD.**
**3-19, Kyobashi 2-chome Chuo-Ku**
**Tokyo 104(JP)**

(72) Inventor: **Tokuda, Shuichiro**
**28-1, Kiyozumi-cho 2-chome Chikusa-ku**
**Nagoya-shi Aichi(JP)**
Inventor: **Yamamoto, Naohiro**
**30 Shiraki 2-chome Takaya Kitakata-cho**
**Motosui-gun Gifu(JP)**

(74) Representative: **West, Alan Harry et al**
**R.G.C. Jenkins & Co. 26 Caxton Street**
**London SW1H 0RJ(GB)**

(54) **Image display panel using multifilament optical fibers.**

(57) An image display panel comprising a plurality of multifilament type plastic optical fibers laminated and arranged in a 1/1 positional relationship between two end faces, one end face being an image incident face and the other end face being an image-emitting face, each multifilament type plastic optical fiber comprising 100 to 10000 light-transmitting islands having a diameter of 5 to 200 μ, which are arranged regularly in the sea, wherein, on the image-incident end face, the end faces of the multifilament type optical fibers are laminated closely without any substantial spaces therebetween and are arranged orthogonal to the optical fiber axis, and on the image-emitting end face, the end faces of the multifilament type optical fibers are laminated with spaces formed between the laminated end faces and are inclined to the optical fiber axis, to emit a magnified image.

*Fig. 1*

## IMAGE DISPLAY PANEL

The present invention relates to an image display panel fabricated by using multifilament type plastic optical fibers having a high image-resolving power, which can be utilized as a large image display device.

Display devices fabricated by using optical fibers have been developed and used as outdoor display devices and indoor display devices in various fields, but since these display devices fabricated by using optical fibers do not, in general, have an image-magnifying capacity, these devices are disadvantageous in that an image to be displayed can be transmitted only at the actual size thereof.

To eliminate this disadvantage, attempts have been made to obtain a magnified image by decreasing the density of the arrangement of optical fibers on the image-emitting face (hereinafter referred to as "emitting face") in the display device, compared with the density of the arrangement of optical fibers on the image-incident face (hereinafter referred to as "incident face") without changing the vertical and horizontal positional relationships of the arranged optical fibers, i.e., by increasing the optical fiber arrangement interval pitches on the emitting face, and this process is proposed, for example, in Japanese Unexamined Patent Publication No. 60-181706. According to this proposal, as shown in Fig. 4, fibers are laminated in a checkerboard pattern on the incident face, and on the emitting face, the end face of each optical fiber is cut at an inclination angle of 8 to 10° to the optical axis to give the emitting end face of each fiber an ellipsoidal shape and expand the pitch between adjacent fibers, whereby the image on the emitting face is magnified. But, in this process, the magnification of the image on the emitting surface is possible only in the direction of the long axis of the above-mentioned ellipsoidal shape, and the magnification of the image in a direction orthogonal to the direction of the long axis can be realized only by interposing a spacer or the like to produce equal pitches in both the longitudinal and lateral directions.

This conventional process is defective in that the image-resolving power is low. Namely, only a resolution of a diameter level of optical fibers used for the image delay device, which have a diameter of 300 to 3,000 $\mu$, is attainable. The diameter of the optical fibers used is determined in view of the handling property in the manufacture of the image display device and the light-transmitting property, and the diameter of the optical fibers is practically about 0.3 to about 3 mm, as pointed out above, and it is impossible in practice to reduce the diameter of the optical fibers, and therefore, it is impossible to increase the resolution to a level higher than the above-mentioned level.

In view of the above, a primary object of the present invention is to provide an image display panel in which the above-mentioned disadvantages are overcome.

More specifically, in accordance with the present invention, there is provided an image display panel comprising a plurality of multifilament type plastic optical fibers laminated and arranged in a 1/1 positional relationship between two end faces, one end face being an image-incident face and the other end face being an image-emitting face, each multifilament type plastic optical fiber comprising 100 to 10000 light-transmitting islands having a diameter of 5 to 200 $\mu$, which are arranged in the sea, wherein, on the image-incident face, the end faces of the optical fibers are preferably orthogonal to the optical fiber axis, and on the image-emitting face, the end faces of the optical fibers are inclined to the optical fiber axis.

Figure 1 is a perspective view showing an image display panel according to one embodiment of the present invention;

Fig. 2 is a sectional view showing an example of the end face of a multifilament type optical fiber used for the image display panel;

Fig. 3 is an enlarged view showing a part of the end face shown in Fig. 2; and,

Fig. 4 is a perspective view showing an example of the conventional image display panel.

The present invention will now be described in detail with reference to the accompanying drawings.

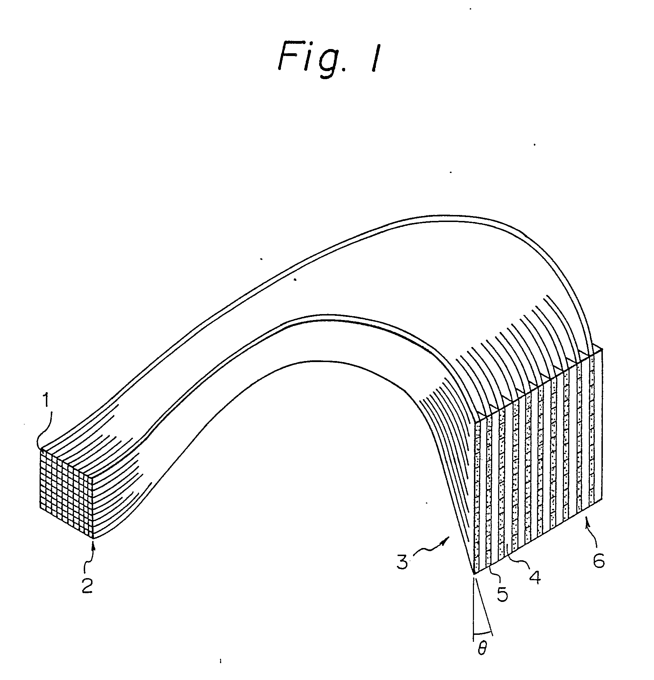

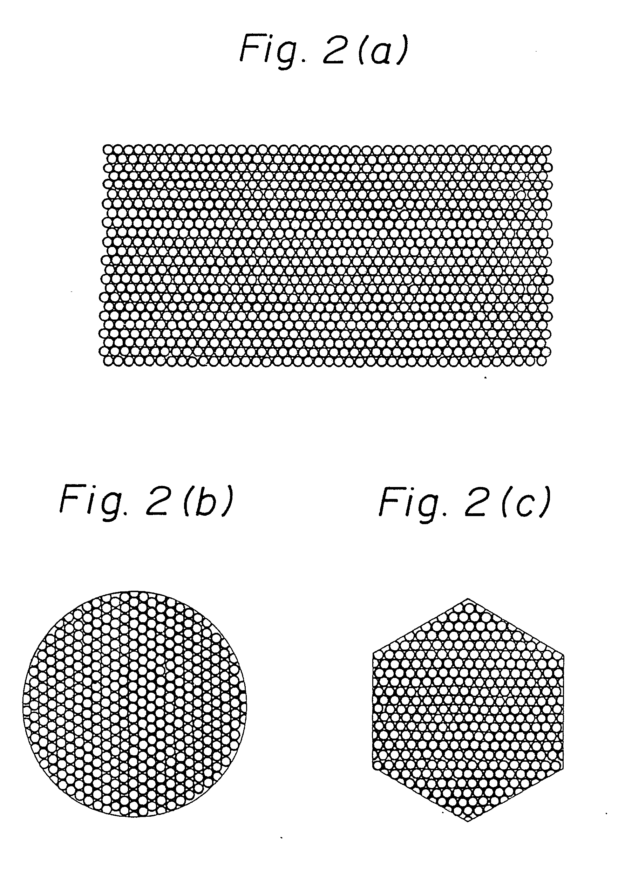

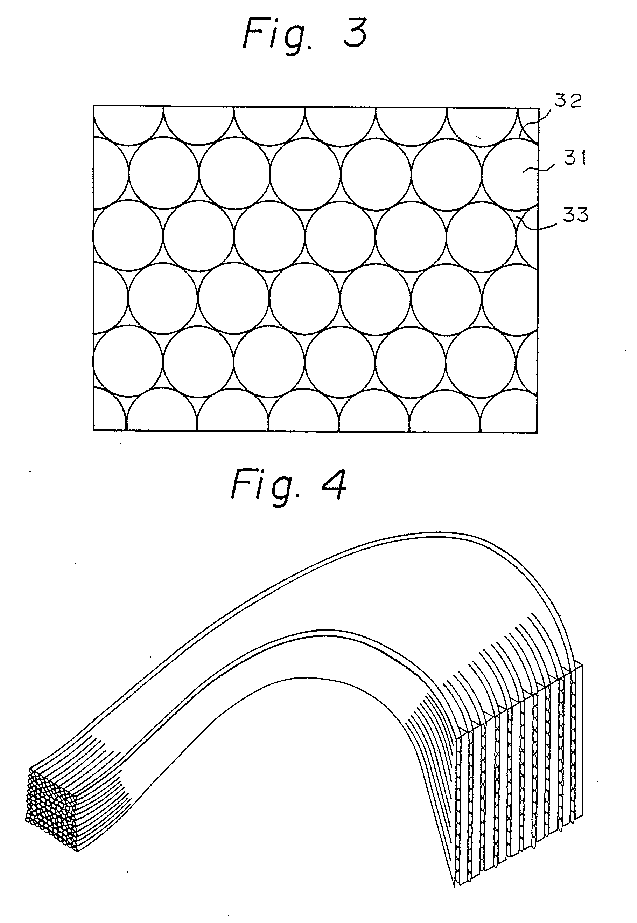

Figure 1 is a perspective view showing an image display panel according to one embodiment of the present invention, Fig. 2 is a diagram illustrating an example of the end face of one multifilament type optical fiber used in the present invention, and Fig. 3 is an enlarged view showing a part of the end face shown in Fig. 2. In Fig. 2, (a) shows a multifilament type optical fiber having a rectangular cross-section, (b) shows a circular cross-section, and (c) shows a multifilament type optical fiber having a hexagonal cross-section as an example of a polygonal cross-section. In the embodiment shown in Fig. 1, multifilament type optical fibers having a rectangular cross-section are used.

As seen from Figs. 2 and 3, the multifilament type plastic optical fiber used in the present invention comprises 100 to 10000 islands having a substantially circular cross-section and a diameter of 5 to 200 $\mu$, which are arranged in the sea so that the total sectional area of the cores constituting the islands is at least 50% based on the total cross-sectional area of the multifilament type optical fiber. In Fig. 3, reference numeral 31 represents the core, reference numeral 32 represents the sheath, and reference numeral 33 represents the sea.

If the diameter of the islands is smaller than 5 $\mu$, spinning of the multifilament type optical fiber becomes difficult, and a multifilament type optical fiber having a uniform shape cannot be obtained. If the diameter of the islands is larger than 200 $\mu$, the softness of the multifilament type optical fiber is lost, and when the multifilament type optical fiber is used in the bent state as in the present invention, an unevenness of the light transmitted through the islands is increased and good results cannot be obtained.

To increase the resolution of the image display panel of the present invention, preferably the total cross-sectional area of the cores constituting the islands is at least 50% based on the cross-sectional area of the multifilament type optical fiber. In the multifilament type optical fiber in which the total cross-sectional area of the cores is smaller than 50%, the total transmission quantity of light is decreased.

The multifilament type optical fiber used in the present invention can be prepared, for example, by the conjugate spinning process disclosed in United States Patent No. 4,732,716.

Referring to Fig. 1, reference numeral 1 represents an end face of the multifilament type optical fiber, reference numeral 2 represents an image-incident end face of an assembly in which ribbon-shaped multifilament type optical fibers are arranged and laminated in a 1/1 positional relationship on both ends, and reference numeral 3 represents an image-emitting end face of the assembly. The image-incident end face 2 is constructed by arranging and laminating the multifilament type optical fibers 1 in such a manner that no space exists in either the longitudinal direction or the lateral direction, and this end face 2 is substantially orthogonal to the fiber axis. As shown in Fig. 1, the image-emitting end face 3 is constructed by laminating the ribbon-shaped optical fibers 1 with lamination spaces 4. The end face 3 is cut at a certain inclination angle $\theta$ to the fiber axis, whereby transmission of an image at a predetermined magnification ratio can be realized on the emitting end faces of the ribbon shaped optical fibers of the image display panel of the present invention. The magnification ratio in the lateral direction, which is in agreement with the above-mentioned magnification ratio in the longitudinal direction, can be realized by forming appropriate spaces 4 among the laminated ribbon-shaped optical fibers, in particular, by inserting appropriate spacers.

As typical examples of the panel composed of the ribbon-shaped optical fibers used in the present invention, there can be mentioned a non-bonded optical fiber panel formed by gathering and arranging a plurality of multifilament type optical fibers by using a mechanical tool, a bonded optical fiber panel formed by gathering and arranging a plurality of optical fibers in the form of a ribbon and bonding the fibers to one another, and an optical fiber panel formed by gathering and arranging a plurality of optical fibers in the form of a ribbon and bonding one surface or both surfaces thereof to one another.

The size of the multifilament type optical fiber used in the present invention is not particularly critical, but in view of the light-transmitting capacity and the handling ease during production, preferably the diameter is about 0.3 to about 3 mm in the case of a circular cross-section or the maximum diagonal line is about 0.3 to about 3 mm in the case of a rectangular or polygonal cross-section. If the diameter or maximum diagonal line is smaller than 0.3 mm, the fiber is too fine and handling becomes difficult, and if the diameter or maximum diagonal line exceeds 3 mn, the fiber is too hard and the flexibility is lost.

The cutting angle $\theta$ to the optical fiber axis on the image-emitting face 6 is a factor directly defining the magnification ratio in the display panel of the present invention. A smaller angle $\theta$ results in a higher magnification ratio, but if the angle $\theta$ is too small, the distribution of emitted light deviates from the front of the image picture and the brightness on the front is reduced. Accordingly, the angle $\theta$ should be determined while taking this fact into consideration. It has been empirically found that, if the angle $\theta$ is about 8 to about 10$^{\circ}$, both the magnification ratio and the brightness on the front are satisfactory in practice.

As shown in Fig. 2, since the size of the cross-section of the light-transmitting islands in the multifilament type optical fiber used in the present invention is 5 to 200 $\mu$, and can be made smaller than in the customarily used monofilament type optical fiber, the resolving power for the transmission of an image is increased and the performance of the image display panel can be enhanced.

The cross-sectional shape of the optical fiber used in the present invention can be any of the types shown in Figs. 2-(a), 2-(b) and 2-(c), each type having advantages and disadvantages, and an appropriate type is selected according to the intended object and use. When an optical fiber having a rectangular cross-section as shown in Fig. 2-(a) is used, the following advantages can be obtained.

(1) As shown in Fig. 1, no space exists between adjacent fibers and thus the transmission efficiency of incident light is much higher than when fibers having a circular or polygonal cross-section are used.

(2) As seen from the state shown in Fig. 1, in the formation of each end face, the optical fibers can be arranged and laminated more precisely than when optical fibers having a circular or polygonal cross-section are used, and this effect is obtained for both the incident and emitting faces, although especially remarkable for the incident end face. Furthermore, the risk of distortion of an image, which often occurs in fibers having a circular or polygonal cross-section because of the unevenness of the diameter, can be substantially eliminated.

In the case of optical fibers having a cross-section as shown in Fig. 2-(b) or 2-(c), a precise arrangement or increase of the transmission efficiency of incident light, as obtained in the case of optical fibers having a rectangular cross-section, cannot be expected, but the flexibility is higher than the level obtained by fibers having a rectangular cross-section, and therefore, the resulting image display panel is most effectively used in fields where this characteristic is desired.

As apparent from the foregoing description, the image display panel of the present invention provides a remarkably superior performance, when compared to the conventional image display panel, and the image display panel of the present invention can be easily prepared by a simple process. Accordingly, the present invention is very valuable from the industrial viewpoint.

## Claims

1. An image display panel comprising a plurality of multifilament type plastic optical fibers laminated and arranged in a 1/1 positional relationship between two end faces, one end face being an image incident face and the other end face being an image-emitting face, each multifilament type plastic optical fiber comprising 100 to 10000 light-transmitting islands having a diameter of 5 to 200 $\mu$, which are arranged regularly in the sea, wherein, on the image-incident end face, the end faces of the multifilament type optical fibers are laminated closely without any substantial spaces therebetween and are arranged orthogonally to the optical fiber axis, and on the image-emitting end face, the end faces of the multifilament type optical fibers are laminated with spaces formed between the laminated end faces and are inclined to the optical fiber axis to emit a magnified image.

2. An image display panel as set forth in claim 1, wherein the multifilament type optical fibers are arranged in the form of a ribbon.

3. An image display panel as set forth in claim 1, wherein in each multifilament type optical fiber, the total cross-sectional area of the cores constituting the islands is at least 50% of the sectional area of the optical fiber.

4. An image display panel as set forth in claim 1, wherein each multifilament type optical fiber has a substantially rectangular cross-sectional shape.

5. An image display panel as set forth in claim 4, wherein one side of the substantially rectangular cross-sectional shape has a length of 0.3 to 3 mm.

6. An image display panel as set forth in claim 1, wherein the inclination angle of the image-emitting end face to the optical fiber axis is 8 to 10°.

Fig. 1

## Fig. 2 (a)

## Fig. 2 (b)

## Fig. 2 (c)

# Fig. 3

# Fig. 4